Europäisches Patentamt

European Patent Office

Office européen des brevets

(11) Veröffentlichungsnummer: **0 065 640**
**B1**

# EUROPÄISCHE PATENTSCHRIFT

(12)

(45) Veröffentlichungstag der Patentschrift:
23.07.86

(21) Anmeldenummer: 82103129.1

(22) Anmeldetag: 14.04.82

(51) Int. Cl.⁴: **B 23 C 5/22**

(54) Innen-Scheibenfräser.

(30) Priorität: 23.05.81 DE 3120588
07.07.81 DE 3126710

(43) Veröffentlichungstag der Anmeldung:
01.12.82 Patentblatt 82/48

(45) Bekanntmachung des Hinweises auf die Patenterteilung:
23.07.86 Patentblatt 86/30

(84) Benannte Vertragsstaaten:
AT FR GB IT SE

(56) Entgegenhaltungen:
AT-B-194 219
DE-A-2 617 278
DE-B-2 515 937
DE-C-318 815
FR-A-734 552
FR-A-999 747
FR-A-1 175 038

VDI-ZEITSCHRIFT, Band 118, Nr. 5, März 1976, Seite
224, Düsseldorf (DE); "Schruppbearbeitung von
Kurbelwellen"

(73) Patentinhaber: Santrade Ltd., Alpenquai 12 P.O.
Box 321, CH- 6002 Luzern (CH)

(72) Erfinder: Wermeister, Günter, Joachimstrasse 53,
D-4000 Düsseldorf 11 (DE)
Erfinder: Noy, Josef, Rheurdter Strasse 39, CH-
4173 Kerken 2 (CH)

(74) Vertreter: Wangemann, Horst, Dipl.- Ing.,
Stresemannstrasse 28, D-4000 Düsseldorf (DE)

## Beschreibung

Die Erfindung bezieht sich auf einen Innen-Scheibenfräser zum Außenrundfräsen von Achsen, Kurbelwellen od. dgl. Werkstücken der im Oberbegriff des Hauptanspruches genannten Art.

Durch die deutsche Auslegeschrift 25 15 937 ist ein Innen-Scheibenfräser dieser Art bekannt. Ihm liegt die Aufgabe zu Grunde, das Werkzeug von durch die Wärmeentwicklung bei der Zerspanungsarbeit auftretenden inneren Spannungen freizuhalten, die das Arbeitsergebnis beeinträchtigen können. Hierzu ist zwischen den einzelnen Kassetten oder Segmenten jeweils ein radialer Spalt belassen, wobei jede Kassette oder jedes Segment durch zwei Schrauben mit dem Grundkörper verbunden ist. Zum Wechseln von Kassetten oder Segmenten bedarf es aber stets des Lösens der doppelten Anzahl an Schrauben, die selbst beim Einschrauben auf Biegung vorgespannt werden.

Dieser bekannten Ausführungsform von Innen-Scheibenfräsern gegenüber besteht die Aufgabe der Erfindung darin, eine hohe Lagegenauigkeit der Kassetten zu erzielen, ohne daß jede der Kassetten ein Befestigungsmittel benötigt und bei Anwendung radialer Spannbolzen als Befestigungsmittel diese nicht auf Scherung oder Biegung beansprucht werden, vielmehr sogar auf die Verwendung von Spannbolzen beim größten Teil der Kassetten verzichtet werden kann und ohne daß die Anlageflächen der Kassetten und des Grundkörpers einer hohen Bearbeitungsgenauigkeit zu unterwerfen sind oder eine solche im Laufe der Benutzungszeit aufrecht zu erhalten ist. - Die hierbei zur Anwendung gelangenden Mittel sollen konstruktiv einfach und gut handhabbar sein.

Zur Lösung dieser Aufgabe sieht die Erfindung die Merkmale des kennzeichnenden Teils des Hauptanspruches vor. - Die Merkmale der Unteransprüche dienen der Verbesserung und Weiterentwicklung des Hauptanspruches.

Durch die französische Patentschrift 734 552 ist ein Innen-Scheibenfräser zum Fräsen von Achsen, Kurbelwellen o. dgl. Werkstücken bekannt, der einen zweiteiligen äußeren Gehäusering aufweist, auf dessen beiden Hälften innenseitig die Schneidwerkzeuge reiterartig aufsitzen und damit in radialer und axialer Richtung gehalten werden, wobei die Stirnflächen der benachbarten Schneidwerkzeuge aneinanderliegen. - Durch die österreichische Patentschrift 19 42 19 ist ein Außenscheibenfräser bekannt, bei dem die meisten der Schneideinsätze tragenden Kassetten mit ihren Stirnflächen aneinanderliegen. Einer der Vorteile des Innen-Scheibenfräsers nach der Erfindung besteht darin, daß die die Schneideinsätze tragenden Kassetten durch ein einziges Element in Form des Spannkeils in Umfangsrichtung des Fräsers gegenseitig verspannt werden können, wobei auf das radiale Befestigen jeder Kassette mittels eines radialen Spannbolzens verzichtet werden kann. Da alle Kassetten kraftschlüssig an ihren Nachbarkassetten anliegen, verteilt sich die auf die jeweils am Werkstück angreifenden Kassetten ausgeübte Schneidkraft weitgehend gleichmässig auf die radialen Spannbolzen. - Ein weiterer Vorteil der Erfindung besteht darin, daß jede Kassette in Nähe oder auf Höhe der vorderen und hinteren Kassettenstirnfläche je eine sich über die Breite der Kassette erstreckende nur linienförmige Anlage an der Innenanlagefläche des ringartigen Grundkörpers findet, d. h. die Kassette mit ihrem Fuß eine Zwei-Linien-Auflage auf der Innenfläche des ringartigen Grundkörpers hat und hierdurch eine genaue Stellung der Kassetten gegenüber dem Grundkörper erreichbar ist. Die Zwei-Linien-Auflage der Kassettenfüße auf der Innenanlagefläche des Grundkörpers läßt sich leicht ohne besondere Anforderung an die Genauigkeit der Fußfläche der Kassette erreichen, wie auch die Oberflächenbearbeitung sowohl der Innenanlagefläche des Grundkörpers wie auch der Fußflächen der Kassetten untergeordnet ist.

Auf der Zeichnung sind Ausführungsbeispiele des erfindungsgemäßen Scheibenfräsers dargestellt und zwar zeigt

Fig. 1 eine Teilansicht des Fräsers in Draufsicht,

Fig. 2 die Stirnansicht einer der Kassetten des erfindungsgemäßen Scheibenfräsers,

Fig. 3 eine der Vielzahl der zur Anwendung gelangenden Kassetten des Scheibenfräsers,

Fig. 4 die Kassette mit parallelen Stirnflächen

Fig. 5 die dieser Kassette benachbarte Kassette des Scheibenfräsers,

Fig. 6 und 7 die Ausbildung des Kassettenfußes und der Kassettenstirnwände gegenüber dem Grundkörper und einer Nachbarkassette.

Der Grundkörper 1 des erfindungsgemäßen Scheibenfräsers besitzt radförmige Gestalt und damit äußeren kreisförmigen, nicht dargestellten Umfang. Der Innenumfang des Grundkörpers 1 weist eine mittlere Rippe 2 auf, die zu beiden Seiten je eine kreisbogenförmige Schulter 3 bildet und eine ringartige Oberseite 4 besitzt. - Der Grundkörper ist als einteiliger, geschlossener Ringkörper ausgebildet, auf dessen Innenseite die Kassetten 5 angeordnet sind, die mit Ausnahme der untenstehend noch näher erläuterten Kassetten 6, 7 gleichartig ausgebildet sind und die die schematisch dargestellten Schneidplatten 8 tragen. Diese sind gruppenweise an allen Kassetten im Kopfbereich 9 vor den Spannuten 10 angeordnet. - Der Fußabschnitt 11 jeder Kassette ist U-förmig mit zwei seitlich einer Ausnehmung 12 vorgesehenen Ansätzen 13, 14 ausgebildet, wobei entweder die die Nut 12 begrenzende Fläche 15 auf der Oberseite 4 der Rippe 2 oder die beiden Endflächen 16, 17 auf den Schulter 3 aufliegen und in unten beschriebener vorzugsweiser Form ausgebildet sind. Die Breite der Nut 12 entspricht der Breite der Rippe 2, so daß die Kassetten in axialer Richtung des Fräsers auf dem Grundkörper 1 reiterartig gehalten werden.

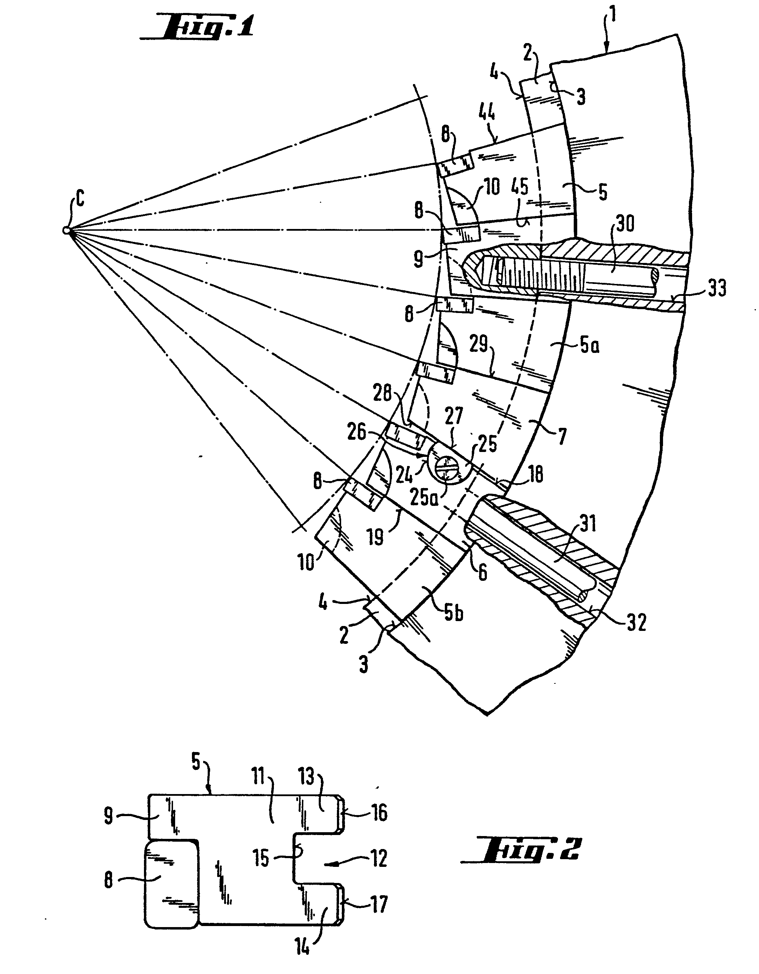

Die gleichartigen Kassetten 5 bilden mit den beiden Kassetten 6 und 7 eine ununterbrochene Reihe von Kassetten mit Schneidplatten. Die Kassette 6 nach Fig. 4 weist (mit Ausnahme der Anordnung der Spannut 10 und der Schneidplatte 8) dieselbe Ausführung wie die der Fig. 1 auf und besitzt zwei parallele Stirnflächen 18, 19 sowie ein Innengewinde 20, in das ein unten noch näher beschriebener Spannbolzen mit seinem radial inneren Ende einschraubbar ist. Die der Kassette 7 benachbarte Stirnfläche 18 weist eine einwärts gerichtete Ausnehmung 21 in etwa der mittleren Höhe der Kassette auf, deren Symmetrieachse M senkrecht zu den Stirnflächen 18, 19 verläuft und die zwei gegenüber den beiden Seitenflächen 22 der Kassette geneigte halbzylindrische Schrägwände 23 besitzt, die gegeneinander dachartig konvergieren und sich in der Kassettenmitte treffen. An jeder dieser Schrägwände liegt ein entsprechender Abschnitt 24 einer Spannkeilhälfte 25 eines Spannkeils 26 an, der mit den äußeren geraden Flächen 27 dieser Spannkeilhälften an der benachbarten Stirnfläche 28 der Kassette 7 anliegt. - Die beiden mit einer Gewindebohrung versehenen Spannkeilhälften sind durch eine Schraube 25a mit zwei gegenläufigen Gewinden gegeneinander verspannbar und gleiten dabei unter mehr oder minder starkem Heraustreten aus der Ausnehmung 21 an den Schrägwänden 23.

Die Kassette 7 ist derart gestaltet, daß sie zusammen mit der Kassette 6 den Zwischenraum zwischen den beiden letzten Kassetten 5a, 5b der ringförmigen Kassettenreihe ausfüllt, wenn, wie bei den Kassetten 5, die benachbarten Stirnflächen aneinanderliegen bzw. die geraden Flächen 27 der Spannkeilhälften 25 des Keils 26 gegen die Stirnfläche 28 anliegen. Hierzu kann der Keil 26 sich in der Ausnehmung 21 um seine Achse drehen.

Während auf ein radiales Verspannen der einzelnen Kassetten 5 der Kassettenreihe verzichtet werden kann oder gegebenenfalls nur jede dritte oder vierte Kassette 5 mittels eines radialen Spannbolzens 30 (Fig. 1) gegen den Grundkörper 1 verspannt wird, greift in die Kassette 6 ein gleicher radialer Spannbolzen 31 ein, der in einer radialen Bohrung 32 des Grundkörpers 1 Aufnahme findet, deren Durchmesser oder Breite in Umfangsrichtung des Grundkörpers 1 größer als der Durchmesser des Spannbolzens 31 ist, so daß dieser innerhalb der Bohrung 32 sich einzustellen vermag, nachdem die Kassetten des Kassettenringes durch den Spannkeil 26 gegeneinander verspannt sind. Gleiches können die Bohrungen 33 gegenüber dem Bolzen 30 aufweisen.

Abweichend von der Ausführungsform der Kassette 6 in Fig. 4 kann diese Kassette Stirnflächen 18, 19 aufweisen, die gegen die Außenseite des Scheibenfräsers, d. h. in Richtung A gegeneinander konvergieren, so daß auch in diesem Falle die Kassette 6 nach Einsetzen aller Kassetten 5 sowie der Kassette 7 zwischen diese und die letzte Kassette 5b eingeschoben werden kann und hiernach das Verspannen dieser Kassette und der Kassetten des gesamten Kassettenringes gegeneinander vollzogen werden kann, wonach dann die zunächst schwach gelösten Spannschrauben 30, 31 angezogen werden können.

Es ist erkennbar, daß zum Lösen aller Kassetten aus dem Grundkörper es nur des Aufhebens der durch den Spannkeil 26 ausgeübten Spannung der Kassetten gegeneinander und gegebenenfalls des Lösens der Spannbolzen 30, 31 sowie des Herausnehmens der Kassette 6 aus ihrer Lage bedarf, um alle Kassetten 5 schnell aus dem Grundkörper entnehmen zu können.

Der Spannkeil kann auch in der Kassette 7 angeordnet sein. Ist der Spannkeil in einer der Kassetten 5 angeordnet, so müssen statt dreier unterschiedlicher Kassettenarten, nämlich der Kassetten 5, 6 und 7 nunmehr vier verschiedene Kassettenarten Anwendung finden.

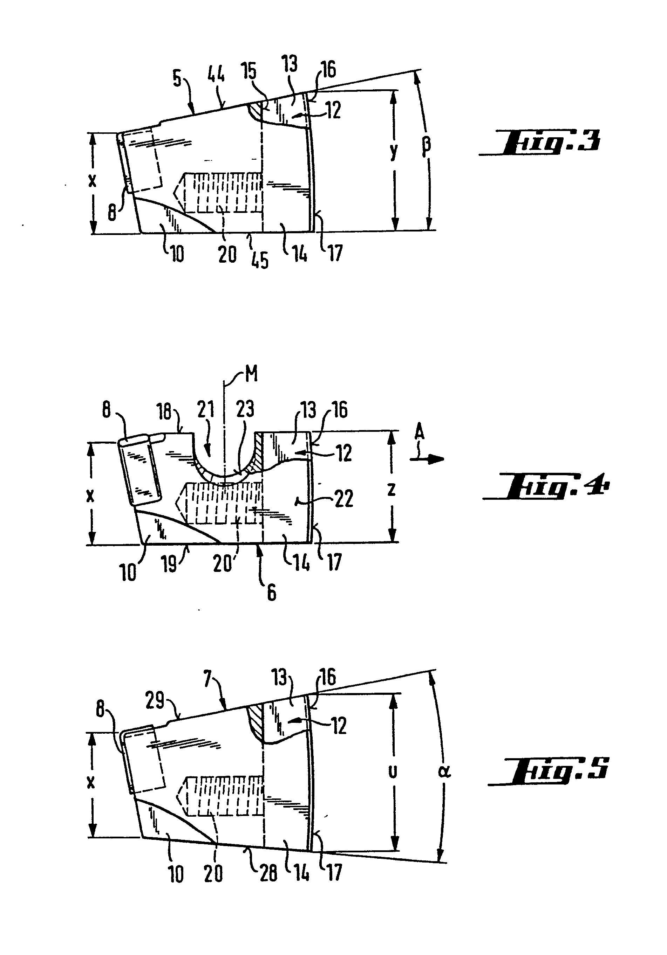

Wie aus dem Vergleich der Kassetten 5, 6 und 7 in Fig. 3 bis 5 der Zeichnung erkennbar ist, hat der der Mittelachse C (Fig. 1) des Grundkörpers 1 zugekehrte Kopfteil aller Kassetten die Länge x in Innenumfangsrichtung, während die Kassetten 5 eine Länge y, die Kassette 8 eine Länge z und die Kassette 7 eine Länge u in Außenumfangsrichtung aufweisen. Da die Kassette 8 parallele oder nach außen konvergierende Stirnflächen 18, 19 aufweist, ist der Winkel α zwischen den Stirnflächen 28, 29 der Kassette 7 entsprechend größer als der Winkel β zwischen den Stirnflächen 44, 45 der Kassetten 5, so daß ein geschlossener Ring aus Kassetten 5, 6 und 7 gebildet wird.

In weiterer Ausbildung der Erfindung ist gemäß Fig. 8 die Fußfläche 42, 43 jeder Kassetten 5, 6 und 7 vorzugsweise konvex gewölbt, wobei der Krümmungshalbmesser K der Fußflächen 42, 43 größer ist als der Krümmungshalbmesser R der beiden, die Innenanlagefläche des Grundkörpers 1 bildenden beidseitigen Schultern 3. (Dargestellt ist nur die Kassette 5). Hierdurch ergibt sich in Nähe bzw. auf Höhe der beiden Stirnflächen 44, 45 jeder Kassette eine linienförmige Anlage bei 46, 47 des mit der allgemeinen Bezugsziffer 45 versehenen Kassettenfußes an der Innenanlagefläche des Grundkörpers 1, die durch die kreisförmigen Schultern 3 zu beiden Seiten der Mittelrippe 2 des Kassettenringes gebildet wird. Da sich die Anlage des Kassettenfußes jeweils über die Breite der Schultern 3 erstreckt, ergibt sich bei 46 und 47 besagte axiale kurze linienförmige Anlage, wobei die Anlagelinien koaxial bzw. parallel zueinander verlaufen und, ohne daß die Fußflächen 42, 43 oder aber die Anlagefläche 49 der Schulter 3 eine besonders exakte Bearbeitung erfahren, ein genaues Ausrichten der Kassetten 5, 6 und 7 ermöglicht wird, auch wenn mit Hilfe des Spannkeils 26 nach Fig. 1 ein in Umfangsrichtung der Kassetten gerichteter Klemmdruck ausgeübt wird. Die Begrenzungsfläche 52 liegt im Abstand von der Oberseite 4 der Rippe 2.

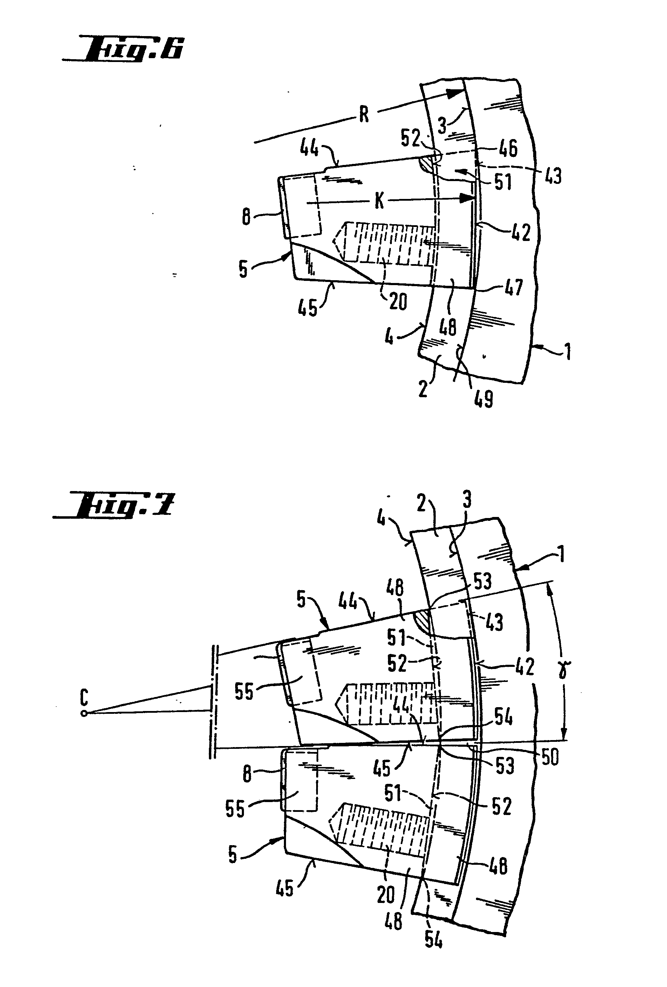

Die einander benachbarten Kassetten 5, 6 und 7 können zwischen ihren Stirnflächen 44, 45 einen kleinen keilförmig gegen die Mittelachse C des Scheibenfräsers (Fig. 1) sich verjüngenden Spalt 50 bilden, wobei die Kassetten in ihrem oberen Kopfbereich 55 mit ihren Stirnflächen aneinander liegen. Hierdurch wird außer der exakten Anlage der Kassetten an dem Grundkörper 1 auch eine exakte Anlage der Kassetten untereinander in Umfangsrichtung erreicht, wenn der Spannkeil 26 wirksam wird. Die Fußfläche 42 ist in Umfangsrichtung kürzer als die Bogenlänge über dem Zentriwinkel γ. (Fig. 6)

Bei einer weiteren Ausführungsform nach Fig. 7 ist es möglich die die Ausnehmung 51 radial einwärts begrenzende Fläche 52 als Anlagefläche an der Oberseite 4 der Rippe 2 des Grundkörpers 1 zu verwenden, wobei die axiale Sicherung der Kassetten 5, 6 und 7 wiederum durch die beiden seitlichen Ansätze entsprechend den Ansätzen 13, 14 in Fig. 1 garantiert wird, ohne daß diese auf den Schultern 3 aufliegen. Bei dieser Ausführungsform ist die Anlagefläche 52 des dem Grundkörper 1 zugekehrten Fußabschnitts 48 der Kassetten 5, 6, 7 so ausgebildet, daß sie wie Fig. 7 zeigt, der Kassette auf Höhe oder in Nähe der Stirnflächen 44, 45 eine linienförmige axiale Auflage bei 53 und 54 auf der Oberseite 4 der Rippe 3 ermöglicht.

## Patentansprüche

1) Innen-Scheibenfräser zum Außenrundfräsen von Achsen, Kurbelwellen od.dgl. Werkstücken, mit einem einteiligen ringscheibenförmigen Grundkörper (1), an dessen Innenumfang Schneideinsätze (8) tragende Kassetten (5, 6, 7) angeordnet sind, von denen in Axialrichtung des Fräsers gesehen, die meisten kreissektorabschnittförmige Gestalt haben, sich mit einer ihrer dem Grundkörper (1) zugekehrten Stützfläche auf einer Innenfläche (3, 4) des Grundkörpers (1) radial abstützen, durch eine Ringfläche (2) axial positioniert sind und die einen Kreisring bildend, jeweils mit ihren beiden Stirnflächen den Stirnflächen benachbarter Kassetten (5, 6, 7) unmittelbar zugewandt sind, dadurch gekennzeichnet, daß die meisten Kassetten (5, 6 oder 7) mit ihren Stirnflächen an den Stirnflächen der Nachbarkassetten anliegen, eine (6) der Kassetten parallele oder nach außen gegeneinander gerichtete Stirnflächen (18, 19) aufweist und mindestens eine (7) ihrer Nachbarkassetten entsprechend geneigte Nachbarstirnflächen besitzt, und an der Kassette (6) mit parallelen oder nach außen gegeneinander gerichteten Stirnflächen (18, 19) oder an einer deren Nachbarkassetten (7) ein in Umfangsrichtung der Kassetten wirksamer Spannkeil (26) angeordnet ist.

2) Innen-Scheibenfräser nach Anspruch 1, dadurch gekennzeichnet, daß der Spannkeil (26) in oder etwa in mittlerer Höhe der Kassette (6) mit parallelen oder nach außen gegeneinander geneigten Stirnflächen (18, 19) angeordnet ist.

3) Innen-Scheibenfräser nach Anspruch 1 und 2, dadurch gekennzeichnet, daß der Spannkeil (26) aus einer der beiden Stirnflächen der Kassette nach außen ragt.

4) Innen-Scheibenfräser nach Anspruch 1 und einem oder mehreren der Ansprüche 2 und 3, dadurch gekennzeichnet, daß der zweiteilige, einseitig abgeflachte Spannkeil (26) in einer dachförmigen parallel zur Achsrichtung des Fräsers gelegenen, nach außen offenen halbkreisförmigen Ausnehmung (21) schwenkbar angeordnet ist.

5) Innen-Scheibenfräser nach Anspruch 1 und einem oder mehreren der Ansprüche 2 bis 4, dadurch gekennzeichnet, daß die Kassette (6) mit parallelen oder nach außen gegeneinander gerichteten Stirnflächen (18, 19) durch einen an sich bekannten radialen Spannbolzen (30, 31) verspannbar ist, der durch eine Bohrung (32) mit tangential größeren Breite oder Durchmesser als der Spannbolzen (30, 31) ragt.

6) Innen-Scheibenfräser nach Anspruch 1 und einem oder mehreren der Ansprüche 2 bis 5, dadurch gekennzeichnet, daß der dem Grundkörper (1) zugekehrte Abschnitt (48) der Kassetten (5, 6, 7) nur an oder in Nähe der vorderen und hinteren Kassettenstirnfläche (44, 45) auf der oder den kreisförmigen Innenanlagefläche (3 bzw. 4) des Grundkörpers (1) aufliegt.

7) Innen-Scheibenfräser nach Anspruch 1 und 6, dadurch gekennzeichnet, daß die dem Grundkörper (1) zugekehrte abstützende Stützfläche der Kassetten (5, 6, 7) in Richtung einer Ebene an die kreisförmige Innenanlagefläche verläuft oder eine Krümmung größeren Halbmessers (K) aufweist als die kreisförmige Innenanlagefläche (4) oder -flächen (3) des Grundkörpers (1).

## Claims

1 An internal disk-type milling cutter for the external round milling of axles, crank-shafts and similar workpieces comprising a single-piece body (1) in the form of an annular disk, on whose inner periphery segments (5, 6 and 7) carrying cutting tips (8) are placed and of which, as seen in the axial direction of the milling cutter, most have a form resembling a circular segment, have their supporting face, turned towards the body (1), abutting radially on an internal face (3 and 4) of the body (1), are axially positioned by means of an annular face (2) and which, forming a circle, each have their two end faces directly adjacent to the end faces of adjacent segments (5, 6 and 7) characterized in that most of the segments (5, 6 or 7) have their end faces resting on the end faces of neighboring segments, one (6) of the segments has end faces (18 and 19) running parallel or converging in an outward direction and at least one (7) of their neighboring segments has correspondingly inclined neighboring end faces, and a holding key (26) is arranged at the segment (6) with parallel or outwardly converging end faces (18 and 19) or one of the neighboring segments (7) thereof, said key acting in a peripheral direction in relation to the segments.

2 The internal milling cutter as claimed in claim 1 characterized in that the holding key (26) is arranged halfway along the segments (6), or approximately so, with parallel or outwardly converging end faces (18 and 19).

3 The internal milling cutter as claimed in claims 1 and 2 characterized in that the holding key (26) extends outwards from one of the two end faces of the segment.

4 The internal milling cutter as claimed in claim 1 and in claims 2 and/or 3 characterized in that the two-piece holding key (26) which has a flat on one side, is pivotally arranged in an outwardly opening semi-sector-like recess (21) which is roof-like in shape and is aligned parallel to the axial direction of the milling cutter.

5 The internal milling cutter as claimed in claim 1 and any one or more of the claims 2 to 4 characterized in that the segment (6) with parallel or outwardly diverging end faces (18 and 19) is able to be clamped in position by a known radial clamping pin (30 and 31), which extends through a hole (32) with a tangentially greater breadth or diameter than the clamping pin (30 and 31).

6 The internal milling cutter as claimed in claim 1 and any one or more of the claims 2 to 5 characterized in that the section (48) nearer the body (1), of the segments (5, 6 and 7) only rests at or near the front and back segment end face (44 and 35) on the circular internal abutment face (3 or 4, respectively) of the body (1).

7 The internal milling cutter as claimed in claims 1 and 6 characterized in that the supporting face, nearer the body (1), of the segments (5, 6 and 7) extends in the direction of a plane on the circular internal supporting face or has curvature with a larger radius (K) than the circular internal supporting face (4) or faces (3) of the body (1).

**Revendications**

1. Fraise disque à coupe interne pour le fraisage de surfaces frontales cylindriques d'arbres, de vilebrequins ou de pièces analogues, qui comprend un corps de base annulaire (1) fait d'une seule pièce, dont le pourtour intérieur comporte des caissons (5, 6, 7) qui portent des pièces de coupe inserrées (8), ont pour la plupart, vus dans le sens de l'axe de la fraise, une forme de secteurs circulaires, prennent appui, dans le sens radial, par leur surface d'appui tournée vers le corps de base (1), sur une surface intérieure (3, 4) du corps de base (1), sont positionnés dans le sens axial par une surface annulaire (2) et forment une couronne, leurs deux surfaces frontales faisant face directement aux surfaces frontales des caissons (5, 6, 7) voisins, caractérisée en ce que la plupart des caissons (5, 6 ou 7) s'appliquent, par leurs surfaces frontales, contre les surfaces frontales des caissons voisins, que l'un du moins (6) des caissons comporte des surfaces frontales (18, 19) parallèles ou s'écartant l'une de l'autre en allant vers l'extérieur que l'un au moins (7) des caissons voisins de lui comporte des surfaces frontales voisines présentant une inclinaison correspondante et qu'au niveau du caisson (6) qui comporte des surfaces frontales (18, 19) parallèles ou s'écartant l'une de l'autre en allant vers l'extérieur ou au niveau de l'un des caissons (7) voisins de ce caisson le dispositif comporte un coin de serrage (26) dont l'action sur les caissons s'exerce dans le sens périphérique.

2. Fraise disque à coupe interne selon la revendication 1, caractérisée en ce que le coin de serrage (26) est placé exactement ou approximativement à mi-hauteur du caisson (6), ses surfaces frontales (18, 19) étant parallèles ou inclinées l'une par rapport à l'autre en allant vers l'extérieur.

3. Fraise disque à coupe interne selon l'une des revendications 1 ou 2, caractérisée en ce que le coin de serrage (26) dépasse vers l'extérieur à partir de l'une des deux surfaces frontales du caisson.

4. Fraise disque à coupe interne selon la revendication 1 et l'une des revendications 2 ou 3, caractérisée en ce que le coin de serrage (26), formée de deux parties et ayant une forme aplatie d'un côté, est monté de manière à pouvoir tourner dans un évidement semi-circulaire (21) en forme de toit ouvert vers l'extérieur et orienté parallèlement à l'axe de la fraise.

5. Fraise disque à coupe interne selon la revendication 1 et l'une des revendications 2 à 4, caractérisée en ce que le caisson (6) qui comporte des surfaces frontales (18, 19) parallèles ou s'écartant l'une de l'autre en allant vers l'extérieur peut être serré par des boulons de tension (30, 31) connu en lui-même, qui passe dans un alésage (32) ayant une largeur dans le sens tangentiel ou un diamètre supérieur au diamètre des boulons de tension (30,31).

6. Fraise disque à coupe interne selon la revendication 1 et l'une des revendications 2 à 5, caractérisée en ce que le secteur (48) des caissons (5, 6, 7) qui est situé du côté du corps de base (1) ne s'applique que sur ou à proximité des surfaces frontales (44, 45) avant et arrière sur la ou les surfaces d'appui circulaires (3 ou 4) du corps de base (1).

7. Fraise disque à coupe interne selon les revendications 1 et 6, caractérisée en ce que la surface d'appui des caissons (5, 6, 7) qui est située du côté du corps de base (1) forme un plan au niveau de la surface de contact intérieure circulaire ou comporte une courbure de plus grand rayon (K) que la ou les surfaces d'appui intérieure(s) circulaire (4, 5) du corps de base (1).

0 065 640

Fig.1

Fig.2

**Fig. 3**

**Fig. 4**

**Fig. 5**

# Fig. 6

# Fig. 7